(19) Europäisches Patentamt
European Patent Office
Office européen des brevets

(11) **EP 1 965 459 B1**

(12) **EUROPEAN PATENT SPECIFICATION**

(45) Date of publication and mention
of the grant of the patent:
**23.05.2012 Bulletin 2012/21**

(51) Int Cl.:
***H01M 8/06*** *(2006.01)*     *C25B 1/04* *(2006.01)*
*C25B 15/02* *(2006.01)*

(21) Application number: **08250178.4**

(22) Date of filing: **15.01.2008**

(54) **Hydrogen generating apparatus and fuel cell power generation system controlling amount of hydrogen generation**

Vorrichtung zur Erzeugung von Wasserstoff und Brennstoffzellen-Stromerzeugungssystem zur Steuerung der Menge des erzeugten Wasserstoffs

Appareil de génération d'hydrogène et système de pile à combustible de production d'énergie contrôlant la quantité de génération d'hydrogène

(84) Designated Contracting States:
**DE FR GB**

(30) Priority: **21.02.2007 KR 20070017343**
**23.08.2007 KR 20070085142**

(43) Date of publication of application:
**03.09.2008 Bulletin 2008/36**

(73) Proprietor: **Samsung Electro-Mechanics Co., Ltd**
**Gyeonggi-do 443-743 (KR)**

(72) Inventors:
• **Gil, Jae-Hyoung**
**Songpa-gu**
**Seoul 138-839 (KR)**
• **Jang, Jae-Hyuk**
**Seocho-gu,**
**Seoul 137-788 (KR)**

• **Kundu, Arunabha**
**Suwon-si**
**Gyeonggi-do 443-755 (KR)**
• **Kim, Sung-Ham**
**Suwon-si**
**Gyeonggi-do 443-714 (KR)**
• **Chae, Kyoung-Soo**
**Suwon-si**
**Gyeonggi-do 443-714 (KR)**

(74) Representative: **Mounteney, Simon James**
**Marks & Clerk LLP**
**90 Long Acre**
**London**
**WC2E 9RA (GB)**

(56) References cited:
**CA-A1- 2 510 371**     **US-A- 4 184 931**
**US-A- 4 798 661**     **US-A1- 2004 009 392**
**US-A1- 2006 088 739**

**Description**

## BACKGROUND OF THE INVENTION

Field of the Invention

The present invention relates to a hydrogen generating apparatus, more particularly to a hydrogen generating apparatus that can control the amount of generation of hydrogen supplied to a fuel cell.

Background Art

A fuel cell refers to an energy conversion apparatus that directly converts chemical energy of a fuel (hydrogen, LNG, LPG, methanol, etc.) and air to electricity and/or heat by means of an electrochemical reaction. Unlike a conventional power generation technology that requires fuel combustion, steam generation, or a turbine or power generator, the fuel cell technology needs no combustion process or driving device, thereby boosting energy efficiency and curbing environmental problems.

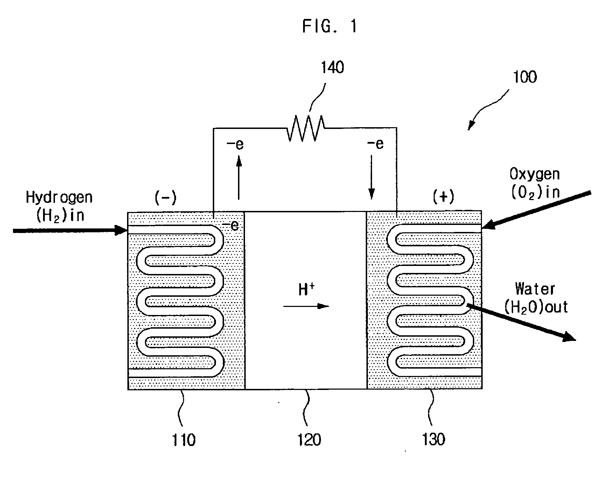

FIG. 1 illustrates an operational architecture of a fuel cell.

Referring to FIG. 1, a fuel cell 100 is composed of an anode as a fuel pole 110 and a cathode as an air pole 130. The fuel pole 110 is provided with hydrogen molecules ($H_2$), and decomposes them into hydrogen ions ($H^+$) and electrons ($e^-$. The hydrogen ion ($H^+$) moves toward the air pole 130 via a membrane 120, which is an electrolyte layer. The electron moves through an external circuit 140 to generate an electric current. In the air pole 130, the hydrogen ions and the electrons are combined with oxygen molecules in the atmosphere, generating water molecules. The following chemical formulas represent the above chemical reactions occurring in the fuel cell 100.

CHEMICAL FORMULA 1

Fuel pole 110: $H2 \rightarrow 2H^+ + 2e^-$

Air pole 130: $1/2\ O_2 + 2H^+ + 2e^- \rightarrow H_2O$

Overall reaction: $H_2 + 1/2\ O_2 \rightarrow H_20$

In short, the fuel cell 100 functions as a battery by supplying the electric current, generated due to the flowing of the decomposed electrons, to the external circuit 140. Such a fuel cell 100 hardly emits an atmospheric pollutant such as Sox and NOx and makes little noise and vibration.

Meanwhile, in order to produce electrons in the fuel pole 110, the fuel cell 100 necessitates a hydrogen generating apparatus that can change a common fuel to hydrogen gas.

A hydrogen storage tank, generally known as a hydrogen generating apparatus, however, occupies a large space and should be kept with care.

Moreover, as a portable electronic device, such as a mobile phone and a notebook computer, requires a large capacity of power, it is necessary that the fuel cell have a large capacity and perform high performance while it is small.

In order to meet the above needs, methanol or formic acid, permitted to be brought into an airplane by International Civil Aviation Organization (ICAO), is used for fuel reforming, or methanol, ethanol, or formic acid is directly used as a fuel for the fuel cell.

However, the former case requires a high reforming temperature, has a complicated system, consumes driving power, and contains impurities (e.g., $CO_2$ and CO) in addition to pure hydrogen. The latter case deteriorates power density due to a low rate of a chemical reaction in the anode and a cross-over of hydrocarbon through the membrane.

## SUMMARY OF THE INVENTION

The present invention sets out to provide a hydrogen generating apparatus, a fuel cell power generation system, a method of controlling the quantity of hydrogen generation, and a recorded medium recorded with a program performing the method that can generate pure hydrogen at room temperature through an electrochemical reaction.

The present invention also sets out to provide a hydrogen generating apparatus, a fuel cell power generation system, a method of controlling the quantity of hydrogen generation, and a recorded medium recorded with a program performing the method that can control the quantity of hydrogen generation without a separate BOP (Balance of Plant) unit while maintaining a simple structure.

The present invention also sets out to provide a hydrogen generating apparatus, a fuel cell power generation system, a method of controlling the quantity of hydrogen generation, and a recorded medium recorded with a program performing the method that are economical and eco-friendly.

The present invention also sets out to provide a hydrogen generating apparatus, a fuel cell power generation system, a method of controlling the quantity of hydrogen generation, and a recorded medium recorded with a program performing the method that can control the quantity of hydrogen generation by use of On/Off time and/or On/Off frequency of a switch.

Moreover, the present invention sets out to provide a hydrogen generating apparatus, a fuel cell power generation system, a method of controlling the quantity of hydrogen generation, and a recorded medium recorded with a program performing the method that can prevent waste or risk of leaking surplus hydrogen in the air simply by turning on the switch and reduce the noise and power consumption by not using a gas pump or a liquid pump.

Moreover, the present invention sets out to provide a hydrogen generating apparatus that can control the amount of generation by use of feedback control according to the demand from a load connected to the fuel cell.

An aspect of the present invention features a hydrogen generating apparatus that is capable of controlling the amount of hydrogen generation.

Accordingly the invention provides a fuel cell power generation system as set out in Claim 1.

Preferred features of this aspect of the invention are set out in Claims 2 to 7.

Further aspects of the present invention provide a method of controlling an amount of hydrogen generation as set out in Claim 8.

## BRIEF DESCRIPTION OF THE DRAWINGS

These and other features, aspects and advantages of the present invention will become better understood with regard to the following description, appended claims and accompanying drawings where:

FIG. 1 illustrates an operational architecture of a fuel cell;

FIG. 2 shows a sectional view of a hydrogen generating apparatus in accordance with an embodiment of the present invention;

FIG. 3 is a graph showing the power consumption of mobile phone.

FIG. 4 is a graph showing how the amount of electric current between a first electrode and a second electrode and the amount of generated hydrogen are related in a hydrogen generating apparatus in accordance with an embodiment of the present invention;

FIG. 5 shows a block diagram of a control unit of a hydrogen generating apparatus in accordance with an embodiment of the present invention;

FIG. 6 shows a block diagram of a fuel cell power generation system in accordance with another embodiment of the present invention;

FIG. 7 is a block diagram of a fuel cell power generation system in accordance with another embodiment of the present invention.

FIG. 8 shows a graph of the amount of hydrogen generation, expressed in units of flow rate, when the switch is turned on;

FIG. 9 shows a first example of the on/off frequency of the switch of a hydrogen generating apparatus in accordance with an embodiment of the present invention;

FIG. 10 shows a second example of the on/off frequency of the switch of a hydrogen generating apparatus in accordance with an embodiment of the present invention;

FIG. 11 shows how the amount of hydrogen generation is related to time when the on/off frequency of the switch is controlled.

FIG. 12 shows a first example of duty ratios of the switch of a hydrogen generating apparatus in accordance with an embodiment of the present invention;

FIG. 13 shows a second example of duty ratios of the switch of a hydrogen generating apparatus in accordance with an embodiment of the present invention;

FIG. 14 shows how the quantity of hydrogen generation is related to time when the duty ratio of the switch is controlled.

FIG. 15 shows a flowchart of a method of controlling the quantity of hydrogen generation in a hydrogen generating apparatus in accordance with an embodiment of the present invention;

FIG. 16 shows a flowchart of a method of controlling the quantity of hydrogen generation in a hydrogen generating apparatus in accordance with another embodiment of the present invention; and

FIG. 17 shows a flowchart of a method of controlling the quantity of hydrogen generation in a hydrogen generating apparatus in accordance with another embodiment of the present invention.

**DESCRIPTION OF THE EMBODIMENTS**

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the scope of the present invention. Throughout the drawings, similar elements are given similar reference numerals. Throughout the description of the present invention, when describing a certain technology is determined to evade the point of the present invention, the pertinent detailed description will be omitted.

Terms such as "first" and "second" can be used in describing various elements, but the above elements shall not be restricted to the above terms. The above terms are used only to distinguish one element from the other. For instance, the first element can be named the second element, and vice versa, without departing the scope of claims of the present invention. The term "and/or" shall include the combination of a plurality of listed items or any of the plurality of listed items.

When one element is described as being "connected" or "accessed" to another element, it shall be construed as being connected or accessed to the other element directly but also as possibly having another element in between. On the other hand, if one element is described as being "directly connected" or "directly accessed" to another element, it shall be construed that there is no other element in between.

The terms used in the description are intended to describe certain embodiments only, and shall by no means restrict the present invention. Unless clearly used otherwise, expressions in the singular number include a plural meaning. In the present description, an expression such as "comprising" or "consisting of" is intended to designate a characteristic, a number, a step, an operation, an element, a part or combinations thereof, and shall not be construed to preclude any presence or possibility of one or more other characteristics, numbers, steps, operations, elements, parts or combinations thereof.

Unless otherwise defined, all terms, including technical terms and scientific terms, used herein have the same meaning as how they are generally understood by those of ordinary skill in the art to which the invention pertains. Any term that is defined in a general dictionary shall be construed to have the same meaning in the context of the relevant art, and, unless otherwise defined explicitly, shall not be interpreted to have an idealistic or excessively formalistic meaning.

Hereinafter, certain embodiments will be described in detail with reference to the accompanying drawings. Identical or corresponding elements will be given the same reference numerals, regardless of the figure number, and any redundant description of the identical or corresponding elements will not be repeated.

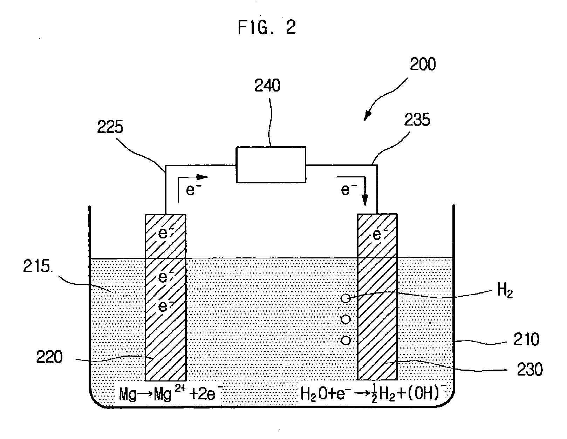

FIG. 2 is a sectional view of a hydrogen generating apparatus in accordance with an embodiment of the present invention.

A hydrogen generating apparatus 200 includes an electrolyzer 210, a first electrode 220, a second electrode 230 and a control unit 240. For the convenience of description and understanding, it will be presumed below that the first electrode 220 is composed of magnesium (Mg) and the second electrode 230 is composed of stainless steel.

The electrolyzer 210 is filled with an aqueous electrolyte solution 215. The aqueous electrolyte solution 215 contains hydrogen ions, which are used by the hydrogen generating apparatus 200 to generate hydrogen gas.

Examples of the electrolyte for the aqueous electrolyte solution 215 are LiCl, KCl, NaCl, $KNO_3$, $NaNO_3$, $CaCl_2$, $MgCl_2$, $K_2SO_4$, $Na_2SO_4$ $MgSO_4$, AgCl, or the like.

The electrolyzer 210 accommodates the first electrode 220 and the second electrode 230, the entirety or portions of which are submerged in the electrolyte solution 215.

The first electrode 220 is an active electrode, where the magnesium (Mg) is oxidized to magnesium ions ($Mg^{2+}$), releasing electrons due to the difference in ionization energies of magnesium and water. The released electrons move to the second electrode 230 through a first electric wire 225, the control unit 240 and a second electric wire 235.

The second electrode 230 is an inactive electrode, where the water molecules receive the electrons moved from the first electrode 220 and then are decomposed into the hydrogen molecules.

The above chemical reactions can be represented as the following chemical formula 2:

CHEMICAL FORMULA 2

First electrode 220: $Mg \rightarrow Mg^{2+} + 2e^-$

Second electrode 230: $2H_2O + 2e^- \rightarrow H_2 + 2(OH)^-$

Overall reaction: $Mg + 2H_2O \rightarrow Mg(OH)_2 + H_2$

The reaction rate and the efficiency of the chemical reaction depend on various factors, including the area of the first electrode 220 and/or the second electrode 230, the concentration of the aqueous electrolyte solution 215, the type of the aqueous electrolyte solution 215, the number of the first electrode 220 and/or the second electrode 230, the method of connecting the first electrode 220 and the second electrode 230, the electric resistance between the first electrode 220 and the second electrode 230.

Changing any of the above factors affects the amount of electric current (that is, the amount of electrons) flowing between the first electrode 220 and the second electrode 230, thereby altering the reaction rate of the electrochemical reaction shown in CHEMICAL FORMULA 2, which in turn changes the amount of hydrogen generated in the second electrode 230.

Therefore, the amount of the hydrogen generated in the second electrode 230 can be controlled by controlling the amount of the electric current that flows between the first electrode 220 and the second electrode 230. Faraday's law explains this as shown in MATHEMATICAL FORMULA 1 below.

## MATHEMATICAL FORMULA 1

$$N_{hydrogen} = \frac{i}{nE}$$

$$N_{hydrogen} = \frac{i}{2x96485} \ (mol)$$

$$V_{hydrogen} = \frac{i}{2x96485} \ x60x22400 \ (ml/min)$$

$$= 7 \ x \ i(ml/min)$$

Where $N_{hydrogen}$ is the amount of hydrogen generated per second (mol/s), $V_{hydrogen}$ is the volume of hydrogen generated per minute (ml/min), i is the electric current (C/s), n is the number of the reacting electrons, and E is the electron charge per mole (C/mol).

In the case of the above CHEMICAL FORMULA 2, n has a value of 2 since two electrons react at the second electrode 230, and E has a value of -96,485 C/mol.

The volume of hydrogen generated per minute can be calculated by multiplying the time (60 seconds) and the molar volume of hydrogen (22400ml) to the amount of hydrogen generated per second.

For example, in the case that the fuel cell is used in a 2W system, and it is assumed that the fuel cell is running a voltage of 0.6V at room temperature and that a hydrogen usage ratio is 60%, it takes 42ml/mol of hydrogen and 6A of electric current. In the case that the fuel cell is used in a 5W system, it takes 105ml/mol of hydrogen and 15A of electric current.

The hydrogen generating apparatus 200 can meet the variable hydrogen demand of the fuel cell connected thereto by controlling the amount of electric current flowing through the first electric wire 225, connected to the first electrode 220, and the second electric wire 235, connected to the second electrode 230.

However, most of the factors that determine the rate of the hydrogen generation reaction occurring in the second electrode of the hydrogen generating apparatus 200, except the electric resistance between the first electrode 220 and the second electrode 230, are hardly changeable once the hydrogen generating apparatus 200 is manufactured.

Therefore, the hydrogen generating apparatus 200 according to this embodiment of the present invention has the control unit 240 disposed between the first electric wire 225 and the second electric wire 235, which connect the first electrode 220 and the second electrode 230, in order to regulate the electric resistance between the first electrode 220 and the second electrode 230.

Thus, the hydrogen generating apparatus 200 controls the electric resistance between the first electrode 220 and the second electrode 230, that is, the amount of the electric current flowing therebetween, thereby generating as much hydrogen as needed by the fuel cell.

The first electrode 220 can be also composed of a metal having a relatively high ionization tendency, such as iron (Fe), aluminum (Al), zinc (Zn), or the like. The second electrode 230 can be also composed of a metal having a relatively low ionization tendency compared to the metal of the first electrode 220, such as platinum (Pt), aluminum (Al), copper (Cu), gold (Au), silver (Ag), iron (Fe), or the like.

The control unit 240 controls a transfer rate, that is, the amount of electric current, at which electrons generated in the first electrode 220 are transferred to the second electrode 230.

The control unit 240 receives information on power demanded for load coupled to the fuel cell and, according to the information, maintains, or increases or reduces the amount of electrons flowing from the first electrode 220 to the second electrode 230.

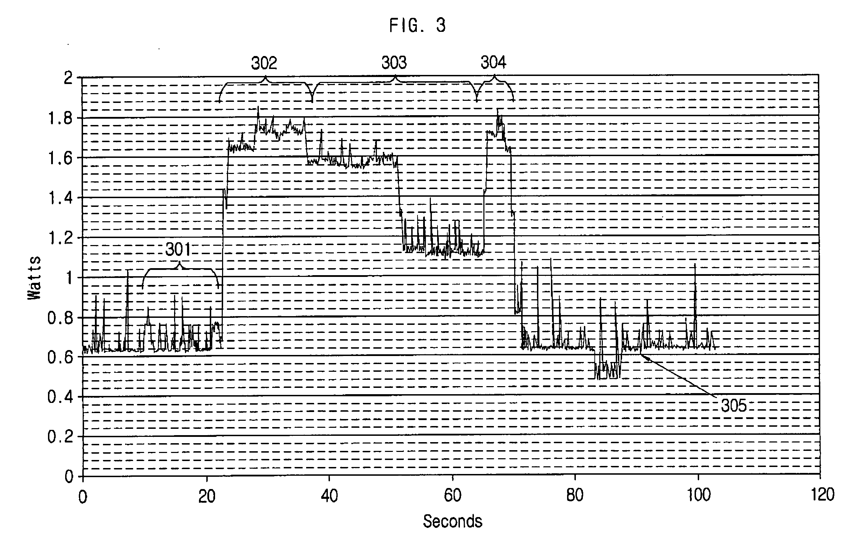

For example, it will be described with reference to the power consumption of mobile phone as shown in FIG. 3. FIG. 3 is a graph showing the power consumption of mobile phone.

The modes of mobile phone depend on the currently-working key or menu selection, and the power consumption also varies accordingly.

Range 301 indicates the situation of requesting a call by dialing, range 302 indicates the situation of waiting a receiver's response with hearing of ring-back tone, range 303 indicates the situation of talking over mobile phone, range 304 indicates the situation of ending a call, and range 305 indicates the situation of sending a call rate message. Since mobile phone operates different components in each of situations, the power consumption varies frequently as shown in FIG. 3.

Therefore controller 240 receives feedback on power demanded for the load such as mobile phone as shown in FIG. 3, and controls to generate hydrogen as much as being demanded so to provide power enough to the load coupled to the fuel cell.

The hydrogen generating apparatus may further comprise an input device for user to manually input the demanded amount of power or hydrogen.

The hydrogen generating apparatus of the present invention can have a plurality of the first electrodes 220 and/or the second electrodes 230. In the case that a plural number of the first electrode 220 and/or the second electrode 230 are disposed, it can take a shorter time to generate the demanded amount of hydrogen since the hydrogen generating apparatus 200 can generate more hydrogen per unit time.

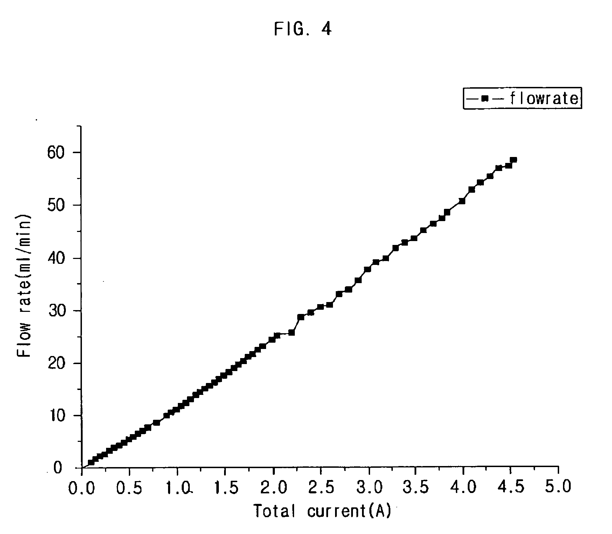

FIG. 4 is a graph showing how the amount of electric current flowing between the first electrode 220 and the second electrode 230 is related to the volume of hydrogen generated on the second electrode 230. Here, it should be noted that the volume of hydrogen is shown in flow-rate measured per minute, because not the total volume of generated hydrogen but the flow-rate of hydrogen is significant to a fuel cell.

An experiment for FIG.3 was conducted under the following conditions:

First electrode 220: Magnesium (Mg)
Second electrode 230: Stainless steel
Distance between the electrodes: 3mm
Ingredients and concentration of electrolyte: 30wt% KCl
Number of the electrodes: Magnesium 3 each, Stainless steel 3 each
Electrode connecting method: Serial
Volume of aqueous electrolyte solution: 60cc (excessive condition)
Size of the electrode: 24 mm $\times$ 85 mm $\times$ 1 mm

The above conditions were used for every graph referred to in describing the present invention.

FIG. 4 shows a greater flow rate of the hydrogen than a theoretical value based on MATHEMATICAL FORMULA 1, due to an interaction of the three pairs of electrodes.

Nevertheless, it is verified from FIG. 4 that the flow-rate of hydrogen is correlated with the amount of electric current between the first electrode 220 and the second electrode 230. Also, the graph shows an almost linear relation between the flow-rate and the amount of the electric current, which agrees with the MATHEMATICAL FORMULA 1.

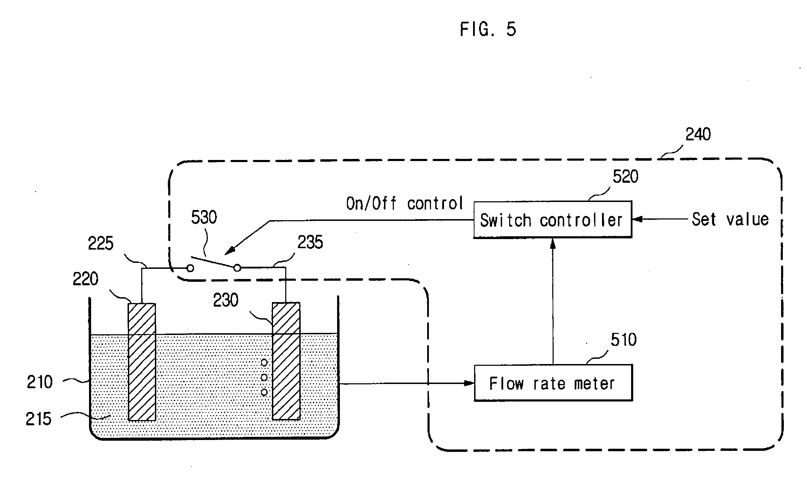

FIG. 5 is a block diagram of the control unit 240 of the hydrogen generating apparatus in accordance with an embodiment of the present invention.

The control unit 240 comprises a flow rate meter 510, a switch controller 520 and a switch 530.

The flow rate meter 510 measures the amount of hydrogen, in units of flow rate, generated from the second electrode 230 of the hydrogen generating apparatus. As described above, in order to use the hydrogen generating apparatus 200 in accordance with the present invention by coupling to a fuel cell, a certain amount of hydrogen generation, not a total quantity of hydrogen generation, should be maintained, and thus it is required that the amount of hydrogen generation be measured in units of ml/min. Of course, it is possible to use other measurement units as long as the unit is capable of measuring the flow rate.

The switch controller 520 is inputted with a set value, which is related to the amount of hydrogen generation. The hydrogen generating apparatus 200 is disposed with a separate input device (not shown), through which the set value can be inputted by the user. The required amount of output (i.e. electric power, voltage, current, impedance, and a combination thereof) or hydrogen generation may be inputted by a fuel cell that is coupled to the hydrogen generating apparatus 200. In the latter case, the fuel cell may be separately equipped with a hydrogen requiring unit for inputting the amount of output or hydrogen generation that is needed by the hydrogen generating apparatus 200.

The switch controller 520 compares the inputted set value with the amount of hydrogen generation measured by the flow rate meter 510. If the amount of generated hydrogen is smaller than the set value, the switch 530 is controlled to increase the amount of hydrogen generation, and if the amount of generated hydrogen is greater than the set value, the switch 530 is controlled to reduce the amount of hydrogen generation. It is assumed that the switch 530 is controlled by a switch control signal such that the switch controller 520 can turn the switch 530 on or off.

The switch is disposed between the first electrode 220 and the second electrode 230. Electrons generated in the first electrode 220 is transferred to the second electrode 230 if the switch 530 is turned on, and the electrons generated in the first electrode 220 is not transferred to the second electrode 230 if the switch 530 is turned off.

That is, the control unit 240 controls the amount of hydrogen generation, using the switch 530 to control whether the electrons are to be transferred from the first electrode 220 to the second electrode 230.

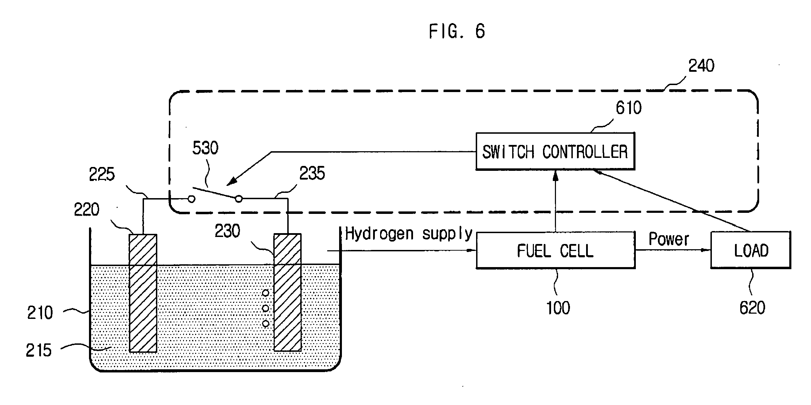

FIG 6 is a fuel cell power generation system comprising controller 240 of hydrogen generating apparatus 200, fuel cell coupled thereto, and a load in accordance with another embodiment of the present invention.

The control unit 240 includes a switch controller 610 and a switch 530. Here, the switch controller 610 and the switch 530 function the same way as described earlier with reference to FIG. 5, and thus their description will be omitted.

The switch controller 610 is coupled to the load 620 to where the fuel cell 100 provides power to. As described above, load 620 demands different power depending on the currently-working condition (with reference to FIG. 3). Therefore the switch controller 610 receives a demanded power for the currently-working condition of load 620.

And, the switch controller 610 is coupled to the fuel cell 100 to receive an output of the fuel cell 100. The output of fuel cell 100 is, for example, power being provided to the load 620 by the fuel cell 100 that receives hydrogen from the hydrogen generating apparatus 200. As described above, in order to use the hydrogen generating apparatus 200 in accordance with the present invention by coupling to a fuel cell, a certain amount of hydrogen generation, not a total quantity of hydrogen generation, should be maintained, and thus electric power of the fuel cell 100 based on the amount of hydrogen generation is received in units of watt (W). In addition switch controller 610 measures voltage of fuel cell 100 and converts into electric power by use of resistance. Of course, it is possible to use other measurement units as long as the unit is capable of measuring the electric power.

The switch controller 610 compares the output of fuel cell 100 with the demanded power of load 620. In case the output of fuel cell 100 is smaller than the demanded power, the switch controller 610 changes on/off time of switch 520 to increase the amount of hydrogen generation, and in case the output of fuel cell 100 is greater than the demanded power, the switch controller 610 changes on/off time of switch 530 to reduce the amount of hydrogen generation. In case the output of fuel cell 100 is within a certain error range compared with the demanded power, current amount of hydrogen generation is maintained. It is assumed that this switching operation is made by a switch control signal enabling the switch controller 610 to set on/off time of the switch 530.

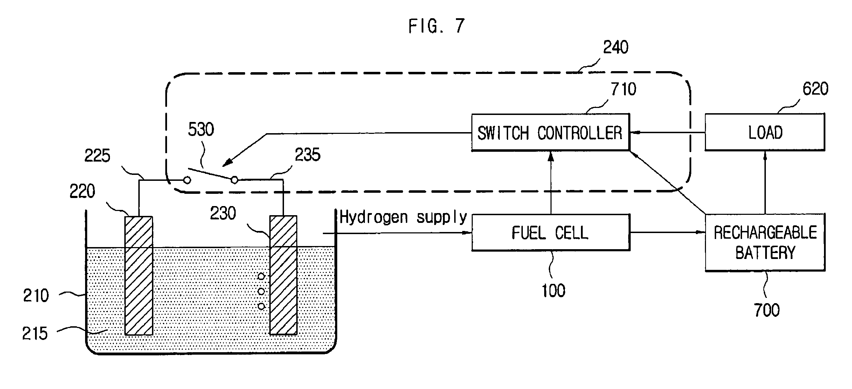

FIG. 7 is a fuel cell power generation system comprising controller 240 of hydrogen generating apparatus 200, fuel cell coupled thereto, and a load in accordance with still another embodiment of the present invention.

The control unit 240 includes a switch controller 710 and a switch 530. Here, the switch 530 functions the same way as described earlier with reference to FIG. 5, and thus repetitive description will be omitted.

When compared with the fuel cell power generation system as shown in FIG. 6, the fuel cell power generation system in FIG. 7 further comprises a rechargeable battery 700. Since fuel cell has slow responsiveness, it is not possible to instantaneously respond to a peak power from the load 620. Thus it becomes possible to respond to peak power by charging the rechargeable battery 700 in advance.

The switch controller 710 measures voltage of rechargeable battery 700 to continuously generate hydrogen for the rechargeable battery 700 to be fully charged and for fuel cell 100 to keep providing voltage.

And the switch controller 710 provides the charged voltage of rechargeable battery 700, and thus in case the voltage of rechargeable battery 700 drops, makes the hydrogen generating apparatus 200 to generate hydrogen.

Namely, the switch controller 710 compares present voltage of the rechargeable battery 700 with fully-charged voltage. The fully-charged voltage means the voltage at when the rechargeable battery 700 is fully charged. In case the present voltage is smaller than the fully-charged voltage, then on/off time of switch 530 is changed to increase the amount of hydrogen generation, and in case the present voltage is equal to or greater than the fully-charged voltage, then on/off time of switch 530 is changed to stop hydrogen generation. It is assumed that this switching operation is made by a switch control signal enabling the switch controller 710 to set on/off time of the switch 530.

Here, the rechargeable battery 700 may be a super capacitor or a small rechargeable battery. Super capacitor has the enhanced electric capacity, and can charge and discharge the electric power if necessary.

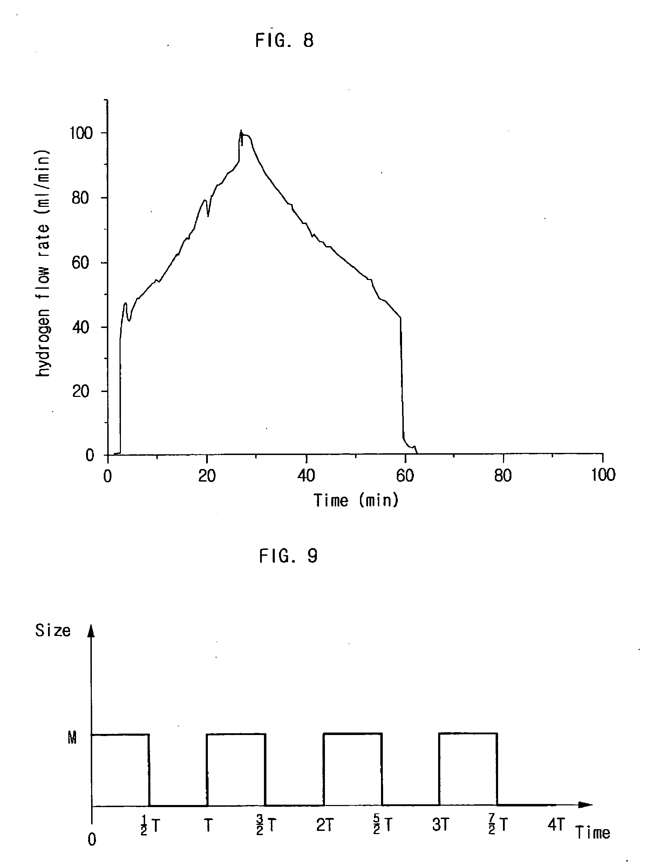

FIG. 8 is a graph of the amount of hydrogen generation, expressed in units of flow rate, when the switch is turned on.

If the switch 530 stays on for a while, the reaction becomes very fast at the beginning, raising the temperature and rapidly increasing the amount of hydrogen generation as much as 100ml/min. Then, the amount of hydrogen generation quickly drops due to the reduction of water in the aqueous electrolyte solution and the metal composing the first electrode 220.

In such a case, it becomes difficult to control the amount of hydrogen generation, and thus the amount of hydrogen generation is controlled to a desired flow rate by having the switch controller 520 control the turning on/off of the switch 530 such that the switch 530 has a certain duty ratio and/or on/off frequency. This will be further described with reference to FIG. 9.

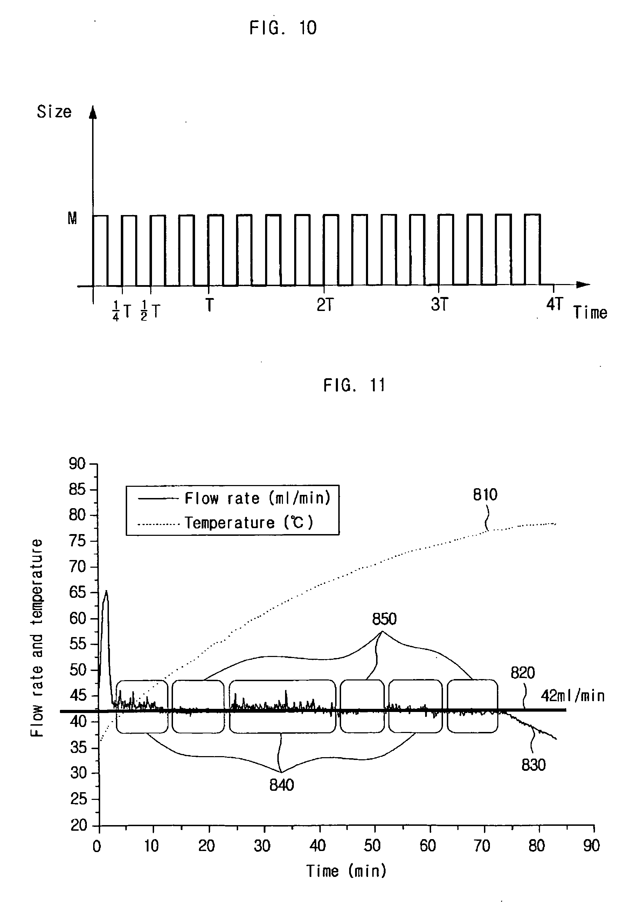

FIG. 9 is a first example of the on/off frequency of the switch of a hydrogen generating apparatus in accordance with an embodiment of the present invention, and FIG. 10 is a second example of the on/off frequency of the switch of a hydrogen generating apparatus in accordance with an embodiment of the present invention. Furthermore, FIG. 11 shows how the amount of hydrogen generation is related to time when the on/off frequency of the switch is controlled. It will be assumed hereinafter that the switch 530 is turned on when the size of an inputted switch control signal is M (i.e., high) and turned off when the size of an inputted switch control signal is 0 (i.e., low).

Referring to FIG. 9, the switch control signal inputted to the switch 530 has a frequency of T and a duty ratio of 50%. In other words, the switch control signal inputted to the switch 530 is high for ½T and low for ½T.

Referring to FIG. 10, on the other hand, the switch control signal inputted to the switch 530 has a frequency of ¼T and a duty ratio of 50%. In other words, the switch control signal inputted to the switch 530 is high for ⅛T and low for ⅛T.

The switch control signal inputted to the switch 530 has a duty ratio (e.g., 50% in the case of FIGS. 9 and 10), and thus the switch 530 is turned on and off for the same duration within one cycle.

Referring to FIG. 11, when the duty ratio of the switch 530 is controlled such that 42ml/min of hydrogen is generated for a fuel cell that requires 2W of electric power, there is fluctuation in the amount of hydrogen generation according to the on/off frequency. The temperature 1110 of the hydrogen generating apparatus 200 increases steadily but stays below 80°C.

The amount of hydrogen generation 1120 is close to 42ml/min. When the on/off frequency is relatively small (i.e., a large cycle) as in FIG. 9, the fluctuation is strong, as shown in boxes represented by 1140. When the on/off frequency is relatively large (i.e., a small cycle) as in FIG. 10, the fluctuation is weak, as shown in boxes represented by 1150.

Therefore, for the same duty ratio, a relatively larger on/off frequency of the switch control signal causes less fluctuation and is easier to maintain the desired amount of hydrogen generation.

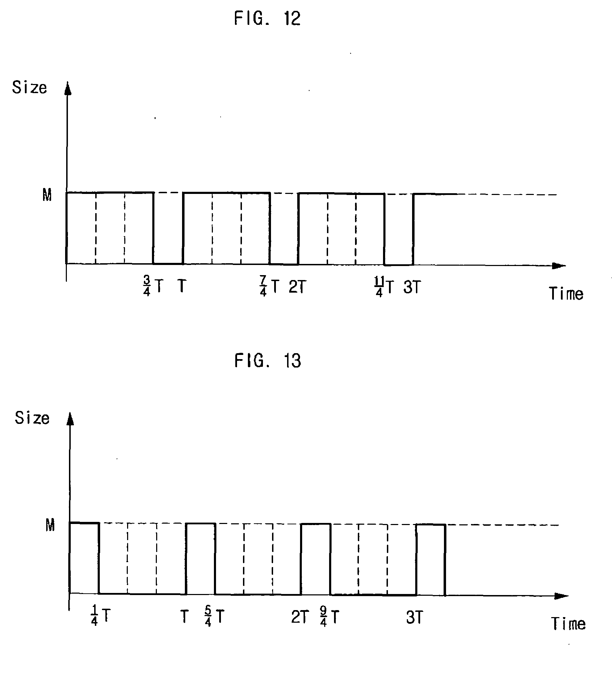

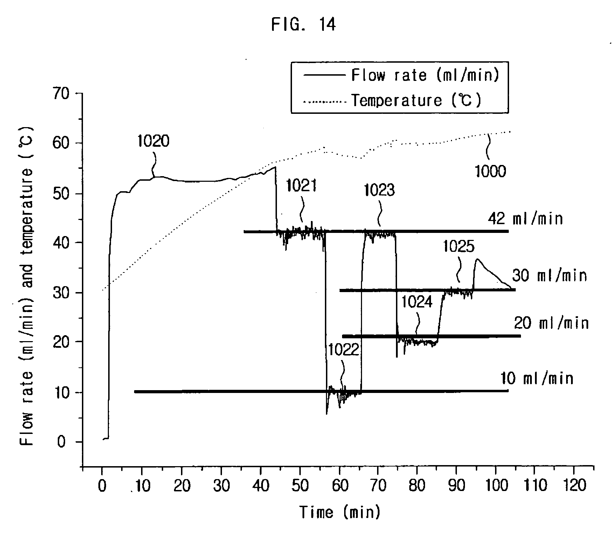

FIG. 12 is a first example of duty ratios of the switch of a hydrogen generating apparatus in accordance with an embodiment of the present invention, and FIG. 13 is a second example of duty ratios of the switch of a hydrogen generating apparatus in accordance with an embodiment of the present invention. FIG. 14 shows how the quantity of hydrogen generation is related to time when the duty ratio of the switch is controlled.

Referring to FIG. 12, the switch control signal has a cycle of T and a duty ratio of 75%, that is, the switch control signal is high for %T and low for ¼T.

Referring to FIG. 13, the switch control signal has a cycle of T, which is the same as that of FIG. 12, and a duty ratio of 25%, that is, the switch control signal is high for ¼T and low for ¾T.

By controlling the duty ratio of the switch control signal that is inputted to the switch 530, it becomes possible to control the amount of hydrogen generation per time that is generated in the hydrogen generating apparatus 200.

Referring to FIG. 14, the amount of hydrogen generation is left to increase naturally at the beginning (refer to the portion of graph represented by 1420), and then the switch controller 520 controls the on and off of the switch 530 to generate 42ml/min (1421), 10ml/min (1422), 42ml/min (1423), 20ml/min (1424) and 30ml/min (1425) of hydrogen.

When the amount of hydrogen generation is adjusted from 42ml/min (1421) to 10ml/min (1422), the ratio of off-time of the switch control signal within one cycle is increased, that is, the duty ratio is gradually decreased. Then, by steadily maintaining the duty ratio when the flow rate meter 510 reads 10ml/min of hydrogen generation, the amount of hydrogen generation is kept at 10ml/min.

When the amount of hydrogen generation is adjusted from 10ml/min (1422) to 42m1/min (1423), the ratio of on-time of the switch control signal within one cycle is increased, that is, the duty ratio is gradually increased. Then, by steadily maintaining the duty ratio when the flow rate meter 510 reads 42ml/min of hydrogen generation, the amount of hydrogen generation is kept at 42ml/min.

By repeatedly performing the above adjustment of duty ratio, the switch controller 520 can adjust the amount of hydrogen generation according to changing set values.

As described with reference to FIGS. 9 to 11, it is possible to control the fluctuation in the amount of hydrogen generation by changing the on/off frequency of the switch 530 in case a certain amount of hydrogen generation is maintained.

Moreover, the amount of hydrogen generation measured in units of flow rate in FIGS. 8, 11 and 14 may be the amount of electric power outputted from the fuel cell 100 in a hydrogen generating apparatus 200 shown in FIG. 7. For example, the flow rate of 42ml/min shown in FIGS. 8, 11 and 14 can correspond to 2W, depending on the operation condition of the fuel cell 100.

In other words, the earlier-measured amounts of hydrogen generation correspond to the output of the fuel cell (i.e., electric power or voltage) that is measured by the switch controller 610, 710 as shown in FIG. 6 or 7. The amount of hydrogen generation to be controlled through the on/off control of the switch corresponds to the output of the fuel cell, that is, electric power or voltage.

The switch of the hydrogen generating apparatus in accordance with an embodiment of the present invention can be made of an MOS (metal-oxide semiconductor) transistor.

The switch controller of the hydrogen generating apparatus in accordance with an embodiment of the present invention can use a power circuit of the fuel cell and be included in a control unit of a fuel cell power generation system. In other words, by including the switch controller in the control unit of a fuel cell power generation system, the switch controller and the control unit of the fuel cell power generation system can be made into one chip.

Moreover, the hydrogen generating apparatus of the present invention can compose a fuel cell power generation system by being connected to a fuel cell. The fuel cell power generation system includes a hydrogen generating apparatus that is possible to control the amount of hydrogen generation and a fuel cell that generates electricity by being supplied with hydrogen from the hydrogen generating apparatus.

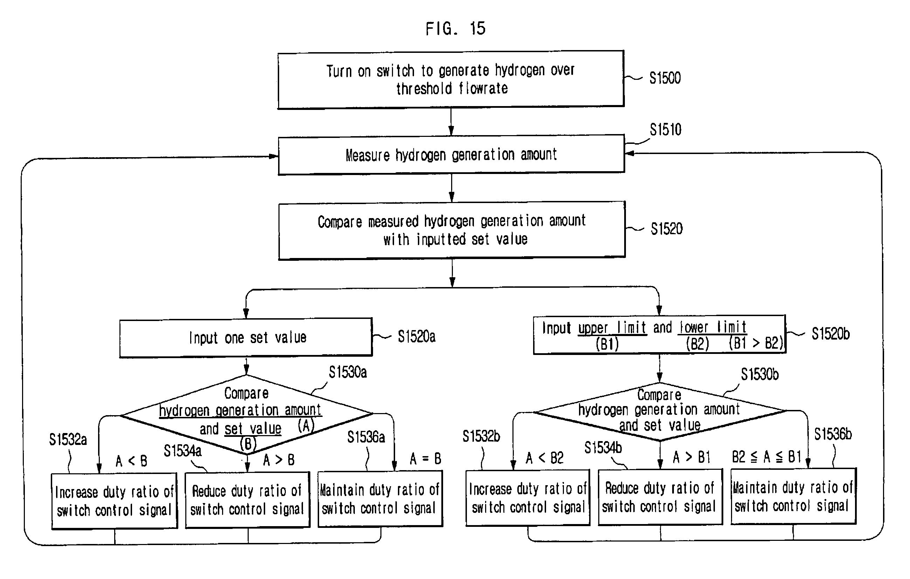

FIG. 15 is a flowchart showing a method of controlling the amount of hydrogen generation in a hydrogen generating apparatus in accordance with an embodiment of the present invention. The hydrogen generating apparatus of FIG. 15 is illustrated in FIG. 5.

The switch controller 520 of the hydrogen generating apparatus 200 turns on the switch 530 and generates hydrogen over a certain threshold of flow rate, in the step represented by S1500.

In step S1510, the flow rate meter 510 measures the amount of hydrogen generation, and in step S1520 the switch controller 520 compares the amount of hydrogen generation, measured by the flow rate meter 510, with an inputted set value. Here, the inputted set value can be one value, as shown in step S1520a, or have an upper limit and a lower limit with a range, as shown in step 1520b.

The switch controller 520 generates a switch control signal for controlling the on/off of the switch according to the set value and applies the switch control signal to the switch 530.

If one set value is inputted, as shown in step S1520a, the amount of hydrogen generation (A) and the set value (B) are compared in step S1530a. In case the amount of hydrogen generation is smaller than the set value (A<B), the duty ratio of the switch control signal is increased in step S1532a, and if the amount of hydrogen generation is greater than the set value (A>B), the duty ratio of the switch control signal is reduced in step S1534a If the amount of hydrogen generation is equal to the set value (A=B), the current duty ratio of the switch control signal is maintained, in step S1536a.

In case the upper limit and the lower limit are inputted in step S 1520b, the amount of hydrogen generation (A), the upper limit (B1) and the lower limit (B2) are compared in step S1530b. If the amount of hydrogen generation is smaller than the lower limit (A<B2), the duty ratio of the switch control signal is increased in step S1532b, and if the amount of hydrogen generation is greater than the upper limit (A>B1), the duty ratio of the switch control signal is reduced in step S1534b. If the amount of hydrogen generation is between the upper limit and the lower limit (B2<=A<=B1), the current duty ratio of the switch control signal is maintained in S1536b.

By repeating steps S1520 to S1536a or S1536b, the hydrogen generating apparatus 200 can generate the amount of hydrogen according to the inputted set value.

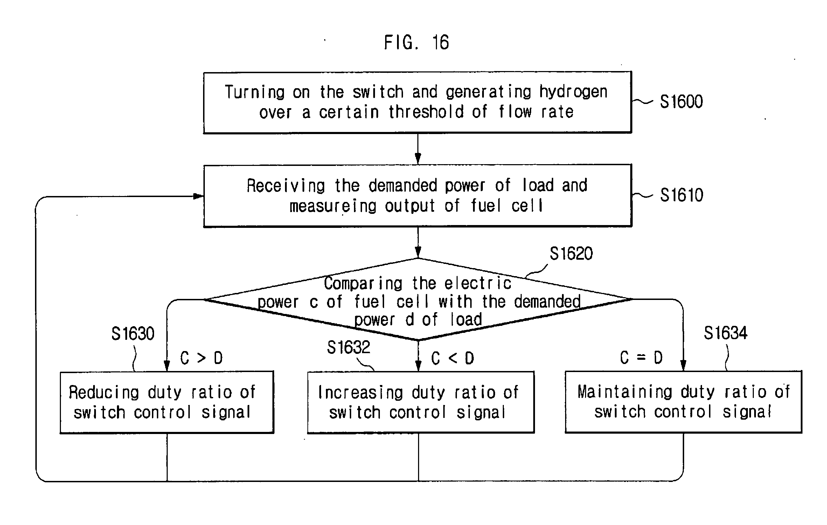

FIG. 16 is a flowchart showing a method of controlling the amount of hydrogen generation in a hydrogen generating apparatus in accordance with another embodiment of the present invention. The hydrogen generating apparatus of FIG. 16 is illustrated in FIG. 6.

The switch controller 610 of the hydrogen generating apparatus 200 turns on the switch 530 and generates hydrogen over a certain threshold of flow rate, in the step represented by S1600.

The switch controller 610 measures output of fuel cell connected to the hydrogen generating apparatus 200, and receives the demanded power of load 620 connected to the fuel cell 100, in the step represented by S1610. Here, the output of fuel cell 100 may be one of electric power or voltage, and in case of voltage, electric power can be calculated by the use of resistance.

And, the switch controller 610 compares the electric power C of fuel cell 100 with the demanded power D of load 620 at step S1620.

According to the comparison, in case the electric power of fuel cell 100 is greater than the demanded power (C>D), the duty ratio of switch control signal is reduced at step S1630, in case the electric power of fuel cell 100 is smaller than the demanded power(C<D), the duty ratio of switch control signal is increased at step S1632, and in case the electric power of fuel cell 100 is equal to the demanded power (C=D), the duty ratio of switch control signal is maintained at step S1634. Here, "equal to" means that the electric power of fuel cell 100 falls within the predetermined error range based on the demanded power.

Then, by repeating steps S1610 to S1630, S1632 or S1634, the hydrogen generating apparatus 200 can control the amount of hydrogen generation for the fuel cell to provide output corresponding to the demanded power of load.

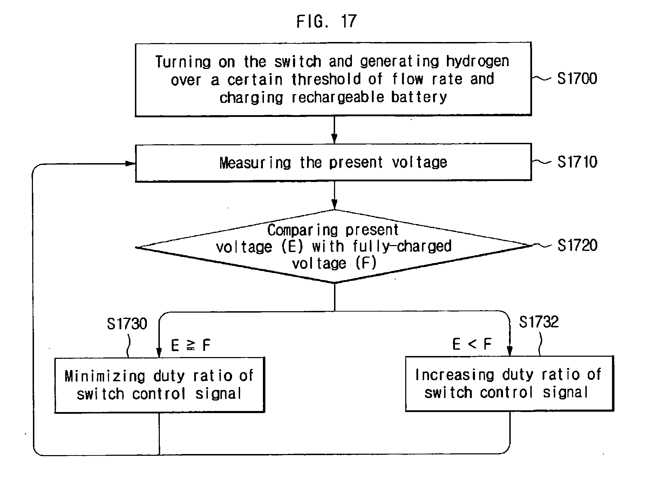

FIG. 17 is a flowchart of a method of controlling the quantity of hydrogen generation in a hydrogen generating apparatus in accordance with another embodiment of the present invention. The hydrogen generating apparatus of FIG. 17 is illustrated in FIG. 7.

By turning on the switch 530 to generate hydrogen over a certain threshold of flow rate, the switch controller 710 of the hydrogen generating apparatus 200 operates the fuel cell 100 and charges the rechargeable battery 700 being connected between the fuel cell 100 and the load 620 in the step represented by S1700.

The switch controller 710 measures the voltage of rechargeable battery 700 at step S1710, and compares the fully-charged voltage F of the rechargeable battery 700 with the present voltage E at step S 1720.

According to the comparison, in case the present voltage is equal to or greater than the fully-charged voltage (E≥F), the switch controller 710 minimizes the duty ratio of switch control signal (including 0%) to prevent the rechargeable battery 700 from being charged at step S1730, and in case the present voltage is smaller than the fully-charged voltage (E<F), the switch controller 710 increases the duty ratio of switch control signal at step S 1732. Here, "equal to" means that the present voltage falls within the predetermined error range based on the fully-charged voltage.

Then, by repeating steps S 1710 to S1730, or S 1732 the hydrogen generating apparatus 200 can control the rechargeable battery 700 to be fully charged for being prepared to the peak power demanded from the load 620.

In the above method of controlling the amount of hydrogen generation, steps S 1520 to S 1536a or S1536b, or steps S1620 to S1630 or S1632, or steps S 1720 to S1730 or S 1732 can be written in a computer program. Codes and code segments, composing the program, can be easily realized by a computer programmer skilled in the art. Moreover, the program is stored in a computer readable medium, and realizes the method of controlling the amount of hydrogen generation by being read and run by a computer. The computer readable medium described above includes a magnetic recording medium, an optical recording medium and a carrier wave medium.

The drawings and detailed description are only examples of the present invention, serve only for describing the present invention and by no means limit or restrict the scope of the present invention. Thus, any person of ordinary skill in the art shall understand that a large number of permutations and other equivalent embodiments are possible. The true scope of the present invention must be defined only by the ideas of the appended claims.

**Claims**

1. A fuel cell power generation system comprising:

   a hydrogen generating apparatus adapted to control an amount of hydrogen generation by controlling an on/off status of a switch connected between electrodes;
   a fuel cell, adapted to be supplied with hydrogen generated by the hydrogen generating apparatus and produce a direct current by converting chemical energy of the hydrogen to electrical energy; and
   a load, adapted to receive the electrical energy and perform a predetermined operation, wherein the hydrogen generating apparatus comprises:

   an electrolyzer, filled with an aqueous electrolyte solution containing hydrogen ions;
   a first electrode, accommodated in the electrolyzer, submerged in the aqueous electrolyte solution, and adapted to generate electrons;
   a second electrode, accommodated in the electrolyzer, submerged in the aqueous electrolyte solution, for receiving the electrons to generate hydrogen;
   a switch, located between the first electrode and the second electrode; and
   a switch controller, adapted to receive a demanded power from the load, measure an output of the fuel cell, compare the demanded power with the output, and control an on/off status of the switch in response to the result of the comparison of the demanded power with the output.

2. A system according to claim 1, in which a metal forming the first electrode has a higher ionization tendency than a metal forming the second electrode.

3. A system according to claim 1, in which the switch controller is adapted to generate and output a switch control signal turning the switch on and off,
   and the switch controller is adapted to determine an on/off ratio of the switch within one cycle by varying a duty ratio of the switch control signal.

4. A system According to claim 3, in which the switch controller is adapted to control a fluctuation in the amount of hydrogen generation by varying an on/off frequency of the switch control signal.

5. A system according to claim 3, in which the switch controller is adapted to compare the demanded power with the output, and reduce the duty ratio if the output is greater than the demanded power, increase the duty ratio if the output is smaller than the demanded power, and maintain the duty ratio if the output is equal to the demanded power.

6. A system according to claim 1 further comprising
a rechargeable battery coupled between the fuel cell and the load, the said battery being adapted to be charged by the electric energy from the fuel cell, and provide the charged electric energy when the load needs it.

7. A system according to claim 6, in which
the switch controller is adapted to measure a present voltage of the rechargeable battery, compare a fully-charged voltage with the present voltage, and control an on/off status of the switch in response to the result of the comparison of the fully charged voltage with the present voltage.

8. A method of controlling a rate of hydrogen generation in a hydrogen generating apparatus comprising electrodes and a switch located between the electrodes and coupled to a fuel cell providing an electric energy to a load the method comprising:

measuring an output of the fuel cell, and receiving a demanded power from the load;
comparing the output with the demanded power; and
reducing a duty ratio of a switch control signal supplied to the switch if the output is greater than the demanded power, increasing the duty ratio of switch control signal if the output is smaller than the demanded power, and maintains the duty ratio of switch control signal if the output is equal to the demanded power, in which the switch control signal controls the on/off status of the switch within one cycle in accordance with the duty ratio.

**Patentansprüche**

1. Brennstoffzellen- Stromerzeugungssystem, Folgendes umfassend:

eine Wasserstofferzeugungsvorrichtung, die dazu angepasst ist, eine Wasserstofferzeugungsmenge zu steuern, indem sie einen Ein-/Ausstatus eines zwischen den Elektroden angeschlossenen Schalters steuert;
eine Brennstoffzelle, die dazu angepasst ist, mit von der Wasserstofferzeugungsvorrichtung erzeugtem Wasserstoff versorgt zu werden und einen Gleichstrom zu erzeugen, indem sie chemische Energie des Wasserstoffs in elektrische Energie umwandelt; und
eine Last, die dazu angepasst ist, die elektrische Energie zu empfangen und eine vorgegebene Operation auszuführen, worin die Wasserstofferzeugungsvorrichtung Folgendes umfasst:

einen Elektrolyseur, der mit einer wässrigen Elektrolyselösung gefüllt ist, die Wasserstoffionen enthält;
eine erste Elektrode, die im Elektrolyseur untergebracht ist, in der wässrigen Elektrolyselösung untergetaucht ist und dazu angepasst ist, Elektronen zu erzeugen;
eine zweite Elektrode, die im Elektrolyseur untergebracht ist und in der wässrigen Elektrolyselösung untergetaucht ist, um die Elektronen zum Erzeugen von Wasserstoff zu empfangen;
einen Schalter, der zwischen der ersten Elektrode und der zweiten Elektrode angeordnet ist; und
einen Schalterregler, der dazu angepasst ist, eine verlangte Leistung von der Last zu empfangen, eine Ausgangsleistung der Brennstoffzelle zu messen, die verlangte Leistung mit der Ausgangsleistung zu vergleichen und einen Ein-/Ausstatus der Schalters als Antwort auf das Ergebnis des Vergleichs der verlangten Leistung mit der Ausgangsleistung zu steuern.

2. System nach Anspruch 1, worin ein die erste Elektrode bildendes Metall eine größere Ionisationstendenz hat als ein die zweite Elektrode bildendes Metall.

3. System nach Anspruch 1, worin der Schalterregler dazu angepasst ist, ein Schaltersteuersignal zu erzeugen und auszugeben, das den Schalter ein- und ausschaltet,
und der Schalterregler dazu angepasst ist, eine Ein-/Ausverhältnis des Schalters in einem Zyklus zu bestimmen, indem er eine relative Einschaltdauer des Schaltersteuersignals variiert.

4. System nach Anspruch 3, worin der Schalterregler dazu angepasst ist, eine Schwankung in der Wasserstofferzeugungsmenge durch Variieren einer Ein-/Ausfrequenz des Schaltersteuersignals zu steuern.

5. System nach Anspruch 3, worin der Schalterregler dazu angepasst ist, die verlangte Leistung mit der Ausgangsleistung zu vergleichen und die relative Einschaltdauer zu reduzieren, falls die Ausgangsleistung größer ist als die verlangte Leistung, die relative Einschaltdauer zu erhöhen, falls die Ausgangsleistung kleiner ist als die verlangte Leistung und die relative Einschaltdauer beizubehalten, falls die Ausgangsleistung gleich der verlangten Leistung ist.

6. System nach Anspruch 1, außerdem umfassend:

eine aufladbare Batterie, die zwischen der Brennstoffzelle und der Last angekoppelt ist, wobei die Batterie dazu angepasst ist, durch die elektrische Energie aus der Brennstoffzelle aufgeladen zu werden und die aufgeladene elektrische Energie zu liefern, wenn sie von der Last gebraucht wird.

7. System nach Anspruch 6, worin
der Schalterregler dazu angepasst ist, eine gegenwärtige Spannung der aufladbaren Batterie zu messen, eine voll aufgeladene Spannung mit der gegenwärtigen Spannung zu vergleichen und einen Ein-/Ausstatus des Schalters als Antwort auf das Ergebnis des Vergleichs der voll aufgeladenen Spannung mit der gegenwärtigen Spannung zu steuern.

8. Verfahren zum Steuern einer Wasserstofferzeugungsrate in einer Wasserstofferzeugungsvorrichtung, die Elektroden und einen zwischen den Elektroden angeordneten Schalter umfasst, der an eine Brennstoffzelle gekoppelt ist, die eine Last mit elektrischer Energie versorgt, wobei das Verfahren umfasst:

Messen einer Ausgangsleistung der Brennstoffzelle und Empfangen einer verlangten Leistung von der Last;
Vergleichen der Ausgangsleistung mit der verlangten Leistung; und
Reduzieren einer relativen Einschaltdauer eines Schaltersteuersignals, das an den Schalter angelegt wird, falls die Ausgangsleistung größer ist als die verlangte Leistung, Erhöhen der relativen Einschaltdauer des Schaltersteuersignals, falls die Ausgangsleistung kleiner ist als die verlangte Leistung und Beibehalten der relativen Einschaltdauer des Schaltersteuersignals, falls die Ausgangsleistung gleich der verlangten Leistung ist, worin das Schaltersteuersignal den Ein-/Ausstatus des Schalters in einem Zyklus gemäß der relativen Einschaltdauer steuert.

**Revendications**

1. Système de génération d'énergie à pile à combustible comprenant :

un appareil de génération d'hydrogène conçu pour commander une quantité de génération d'hydrogène en commandant un état fermé/ouvert d'un commutateur connecté entre des électrodes ;
une pile à combustible, conçue pour être alimentée par l'hydrogène généré par l'appareil de génération d'hydrogène et pour produire un courant continu en convertissant l'énergie chimique de l'hydrogène en une énergie électrique ; et
une charge, conçue pour recevoir l'énergie, électrique et effectuer une opération prédéterminée, dans lequel l'appareil de génération d'hydrogène comprend :

un dispositif d'électrolyse, rempli d'une solution d'électrolyte aqueuse contenant des ions d'hydrogène ;
une première électrode, logée dans le dispositif d'Électrolyse, immergée dans la solution d'électrolyte aqueuse, et conçue pour générer des électrons ;
une deuxième électrode, logée dans le dispositif d'électrolyse, immergée dans la solution d'électrolyte aqueuse, pour recevoir les électrons pour générer de l'hydrogène ;
un commutateur, situé entre la première électrode et la deuxième électrode ; et
un contrôleur de commutateur, conçu pour recevoir une énergie demandée de la charge, mesurer une sortie de la pile à combustible, comparer l'énergie demandée avec la sortie, et commander un état ferme/ouvert du commutateur en réponse au résultat de la comparaison de l'énergie demandée avec la sortie.

2. Système selon la revendication 1, dans lequel un métal formant la première électrode a une tendance à l'ionisation supérieure à celle d'un métal formant la deuxième électrode.

3. Système selon la revendication 1, dans lequel le contrôleur de commutateur est conçu pour générer et délivrer un signal de commande de commutateur fermant et ouvrant le commutateur,
et le contrôleur de commutateur est conçu pour déterminer un rapport de fermeture/ouverture du commutateur pendant un cycle en faisant varier un rapport cyclique du signal de commande de commutateur.

**4.** Système selon la revendication 3, dans lequel le contrôleur de commutateur est conçu pour commander une fluctuation de la quantité de génération d'hydrogène en faisant varier une fréquence de fermeture/ouverture du signal de commande de commutateur.

**5.** Système selon la revendication 3, dans lequel le contrôleur de commutateur est conçu pour comparer l'énergie demandée avec la sortie, et réduire le rapport cyclique si la sortie est supérieure à l'énergie demandée, augmenter le rapport cyclique si la sortie est inférieure à l'énergie demandée, et maintenir le rapport cyclique si la sortie est égale à l'énergie demandée.

**6.** Système selon la revendication 1 comprenant en outre :

une batterie rechargeable couplée entre la pile à combustible et la charge, ladite batterie étant conçue pour être chargée par l'énergie électrique provenant de la pile à combustible, et pour fournir l'énergie électrique chargée lorsque la charge le nécessite.

**7.** Système selon la revendication 6, dans lequel
le contrôleur de commutateur est conçu pour mesurer une tension actuelle de la batterie rechargeable, comparer une tension à pleine totale avec la tension actuelle, et commander un état fermé/ouvert du commutateur en réponde au résultat de la comparaison de la tension à pleine charge avec la tension actuelle.

**8.** Procédé de commande d'un taux de génération d'hydrogène dans un appareil de génération d'hydrogène comprenant des électrodes et un commutateur situé entre les électrodes et couplé à une pile à combustible fournissant une énergie électrique à une charge, le procédé consistant à :

mesurer une sortie de la pile à combustible, et recevoir une énergie demandée de la charge ;
comparer la sortie avec l'énergie demandée ; et
réduire un rapport cyclique d'un signal de commande de commutateur appliqué au commutateur si la sortie est supérieure à l'énergie demandée, augmenter le rapport cyclique du signal de commande de commutateur si la sortie est inférieure à l'énergie demandée, et maintenir le rapport cyclique du signal de commande de commutateur si la sortie est égale à l'énergie demandée, dans lequel le signal de commande de commutateur commande l'état fermé/ouvert du commutateur pendant un cycle selon le rapport cyclique.

FIG. 1

FIG. 2

$$Mg \rightarrow Mg^{2+} + 2e^-$$

$$H_2O + e^- \rightarrow \tfrac{1}{2}H_2 + (OH)^-$$

FIG. 3

EP 1 965 459 B1

FIG. 4

FIG. 5

On/Off control

530

520

Switch controller ◄── Set value

240

225

235

220

230

210

215

510

Flow rate meter

EP 1 965 459 B1

## FIG. 6

EP 1 965 459 B1

EP 1 965 459 B1

FIG. 7

## FIG. 8

## FIG. 9

## FIG. 10

## FIG. 11

FIG. 12

FIG. 13

FIG. 14

FIG. 15

```
┌─────────────────────────────────────────┐
│ Turn on switch to generate hydrogen over │ ～ S1500
│          threshold flowrate              │
└─────────────────────────────────────────┘
                    │
                    ▼
┌─────────────────────────────────────────┐  ～ S1510
│      Measure hydrogen generation amount  │
└─────────────────────────────────────────┘
                    │
                    ▼
┌─────────────────────────────────────────┐
│ Compare measured hydrogen generation amount │ ～ S1520
│        with inputted set value           │
└─────────────────────────────────────────┘
```

| Input one set value ～ S1520a | Input upper limit and lower limit ～ S1520b |
| | (B1) (B2) (B1 > B2) |

**Left branch (S1530a):**

Compare hydrogen generation amount and set value (B) (A)

- S1532a / A < B: Increase duty ratio of switch control signal
- S1534a / A > B: Reduce duty ratio of switch control signal
- S1536a / A = B: Maintain duty ratio of switch control signal

**Right branch (S1530b):**

Compare hydrogen generation amount and set value

- S1532b / A < B2: Increase duty ratio of switch control signal
- S1534b / A > B1: Reduce duty ratio of switch control signal
- S1536b / B2 ≦ A ≦ B1: Maintain duty ratio of switch control signal

EP 1 965 459 B1

## FIG. 16

```
┌─────────────────────────────────────────┐
│  Turning on the switch and generating hydrogen  │ ─── S1600
│      over a certain threshold of flow rate      │
└─────────────────────────────────────────┘
                      │
                      ▼
┌─────────────────────────────────────────┐
│   Receiving the demanded power of load and      │ ─── S1610
│       measureing output of fuel cell            │
└─────────────────────────────────────────┘
                      │
                      ▼                              S1620
           Comparing the electric
       power c of fuel cell with the demanded
                 power d of load

  S1630          C > D        S1632    C < D        C = D      S1634

┌──────────────────┐  ┌──────────────────┐  ┌──────────────────┐
│ Reducing duty ratio of │  │ Increasing duty ratio of │  │ Maintaining duty ratio of │
│  switch control signal │  │  switch control signal   │  │   switch control signal   │
└──────────────────┘  └──────────────────┘  └──────────────────┘
```

EP 1 965 459 B1

FIG. 17

```
┌─────────────────────────────────────────┐
│  Turning on the switch and generating    │
│  hydrogen over a certain threshold of    │  ~ S1700
│  flow rate and charging rechargeable     │
│  battery                                 │
└─────────────────────────────────────────┘
                    │
                    ▼
┌─────────────────────────────────────────┐
│       Measuring the present voltage      │  ~ S1710
└─────────────────────────────────────────┘
                    │
                    ▼
           Comparing present
        voltage (E) with fully-charged      ~ S1720
              voltage (F)
```

S1730                              S1732

E ≥ F                              E < F

┌──────────────────────┐    ┌──────────────────────┐
│ Minimizing duty ratio │    │ Increasing duty ratio │
│ of switch control     │    │ of switch control     │
│ signal                │    │ signal                │
└──────────────────────┘    └──────────────────────┘